# FASCICULE DE BREVET EUROPEEN

(11) **EP 3 427 032 B1**
(45) Date de publication et mention de la délivrance du brevet: **14.10.2020**
(21) Numéro de dépôt: 17713352.7
(22) Date de dépôt: 08.03.2017
(51) Int. Cl.: G01N 1/38, G01N 13/00

(54) **SYSTÈME ET PROCÉDÉ DE MÉLANGE AUTOMATIQUE DE SOLUTIONS**
SYSTEM UND VERFAHREN ZUR AUTOMATISCHEN MISCHUNG VON LÖSUNGEN
SYSTEM AND METHOD FOR AUTOMATICALLY MIXING SOLUTIONS

(30) Priorité: 10.03.2016 FR 1651989
(43) Date de publication de la demande: 16.01.2019
(73) Titulaire: Biomérieux, 69280 Marcy-L'Etoile (FR)
(72) Inventeur: COLIN, Bruno, 69280 Marcy l'Etoile (FR); MILTCHEFF, Audrey, 69260 Charbonnières les Bains (FR)
(86) Numéro de dépôt international: PCT/FR2017/050509
(87) Numéro de publication internationale: WO 2017/153679

(56) Documents cités:
- FR-A- 1 457 933
- FR-A1- 2 623 283
- US-A- 4 681 858

## Description

### DOMAINE DE L'INVENTION

La présente invention a trait au domaine des dispositifs de mélange de solutions, en particulier des dispositifs de dilution d'une solution.

La présente invention trouve particulièrement application dans le domaine du diagnostic in vitro, notamment dans le domaine de l'analyse biologique.

### ETAT DE LA TECHNIQUE

L'analyse biologique d'un échantillon nécessite le plus souvent la production d'une solution, solution provenant elle-même du mélange de plusieurs solutions et/ou obtenue suite à la dilution d'une solution, notamment dans des tampons de dilution.

En particulier, dans les laboratoires d'analyse biologique, la préparation de solutions diluées est un poste chronophage et à faible valeur ajoutée. Notamment, un technicien de laboratoire passe une bonne partie de son temps à remplir des tubes de dilution, à pipeter des solutions, à introduire les solutions pipetées dans les tubes de dilution et à homogénéiser les solutions mélangées obtenues au moyen d'un agitateur. Ces opérations manuelles rendent le technicien indisponible pour la mise en œuvre de tâches à plus forte valeur ajoutée, notamment la mise en œuvre des analyses biologiques elles-mêmes.

Les documents US4681858, FR2623283 et tout spécialement le document FR1457933, représentent des illustrations de l'état de l'art pertinent.

### EXPOSE DE L'INVENTION

Le but de la présente invention est de proposer un système permettant le mélange et l'homogénéisation automatique de solutions.

A cet effet, l'invention a pour objet un système de mélange de solutions selon la revendication 1.

En d'autres termes, le mélange de deux solutions consiste à remplir les premier et deuxième récipients puis à plonger le premier récipient dans le deuxième récipient. Le mélange et l'homogénéisation des solutions étant réalisés automatiquement par la mise en rotation du premier récipient, sans utilisation d'agitateur. Le technicien de laboratoire et/ou d'autres automates en lien avec le système selon l'invention, disposent donc de solutions mélangées dans les seconds récipients.

Selon un mode de réalisation, le premier récipient a un volume interne pour le remplissage de la solution compris entre 1 millilitre et 5 millilitres, de préférence compris entre 1 millilitre et 3 millilitres.

Selon un mode de réalisation, le premier récipient présente un volume interne pour la solution compris entre 1 millilitre et 2 millilitres et une ouverture circulaire pour le remplissage de la solution comprise entre 8,5 millimètres et 13 millimètres. En variante, ou de manière complémentaire, la tige comprend une rondelle disposée au-dessus du godet. Ces caractéristiques permettent chacune de pencher le godet sans risquer de renverser son contenu.

Selon un mode de réalisation, le système comprend plusieurs deuxièmes récipients, les moyens de déplacement étant aptes à plonger le premier récipient successivement dans les deuxièmes récipients. En d'autres termes, en passant le premier récipient successivement dans les deuxièmes récipients, sans le vider entre les passages, on obtient le mélange de la solution contenue initialement dans le premier récipient avec l'ensemble des solutions contenues dans les deuxièmes récipients. Par ailleurs, à la différence d'une dilution de l'état de la technique qui utilise usuellement un cône de pipette pour chaque mélange, en raison de la rotation, le premier récipient est efficacement rincé. Il n'est donc pas nécessaire de le changer pour procéder au mélange suivant. Un gain important de consommables est ainsi réalisé.

En particulier, le système comprend des moyens de remplissage du premier récipient avec une solution à diluer, et des moyens de remplissage de chaque deuxième récipient avec un tampon de dilution. En d'autres termes, le passage successif du premier récipient dans les deuxièmes récipients consiste en une dilution sérielle de la solution initialement contenue dans le premier récipient. Notamment, en remplissant les deuxièmes récipients, par exemple identiques, avec un volume déterminé de tampon de dilution et en choisissant un premier récipient dont le volume est égal à 1/9^{e} du volume de tampon de dilution, il est obtenu une dilution sérielle décimale de la solution initiale du premier récipient.

Selon un mode de réalisation, le premier récipient comprend une ouverture pour le remplissage de la solution et les moyens d'entrainement en rotation comprennent :
- un moteur raccordé à une seconde extrémité de la tige et configuré pour entrainer en rotation celle-ci.

En d'autres termes, le mélange et l'homogénéisation sont obtenues grâce à un « simple » godet muni d'une tige raccordée à un moteur. En particulier, si le godet, de fabrication simple, présente une seule ouverture dans sa partie supérieure, la disposition de cette ouverture n'empêche pas un mélange et une homogénéisation efficace des solutions.

En particulier, la tige est raccordé au moteur de manière amovible. Ainsi, l'ensemble formé du premier récipient et de la tige constitue un consommable interchangeable, qui peut donc être retiré du système pour son nettoyage ou qui peut être à usage unique.

Notamment, le premier récipient comprend un axe de symétrie sur lequel est positionné la tige.

Selon une variante, la tige comprend une rondelle disposée au-dessus du premier récipient, ce qui limite le risque de reversement lorsque le godet est penché.

Selon un mode de réalisation, le premier récipient une pièce avec une symétrie de révolution ayant en partie supérieure une ouverture et ayant en partie inférieure une portion tronconique ou conique. La partie conique ou tronconique du premier récipient permet une introduction facilité du premier récipient dans la solution contenue dans un deuxième récipient, ainsi qu'un mouchage efficace d'une goutte qui pend du premier récipient lorsqu'il est retiré du deuxième récipient.

L'invention a également pour objet un procédé de mélange de solutions selon la revendication 12.

En particulier, le premier récipient a un volume interne pour le remplissage de la solution compris entre 1 millilitre et 5 millilitres.

Selon un mode de réalisation, le mélange de la solution contenue dans le premier récipient successivement avec les solutions contenues dans les deuxièmes récipients.

Selon un mode de réalisation, chaque deuxième récipient est rempli avec un volume prédéterminé de solution, et le premier récipient est de capacité volumique égale à 1/9e dudit volume.

Selon un mode de réalisation, le premier récipient est rempli avec une solution à diluer, et chaque deuxième récipient est rempli avec un tampon de dilution.

L'invention a également pour objet un dispositif pour le mélange de solutions selon la revendication 16.

En particulier, le premier récipient a un volume interne pour le remplissage de la solution compris entre 1 millilitre et 5 millilitres.

### BREVE DESCRIPTION DES FIGURES

L'invention sera mieux comprise à la lecture de la description qui va suivre, donnée uniquement à titre d'exemple, et faite en relation avec les dessins annexés, dans lesquels des références identiques désignent des éléments identiques ou équivalents, et dans lesquels :
- la figure 1 est une vue schématique d'un système de mélange de solutions selon l'invention ;
- les figures 2A-2D sont une vue en coupe schématique d'un godet et d'une tige entrant dans la constitution du système de la figure 1 ;
- les figures 3A à 3E sont des vues schématiques d'un premier et d'un deuxième récipients illustrant un procédé selon l'invention de mélange des solutions contenues dans ceux-ci ;
- et la figure 4 est une vue schématique d'un dispositif de mélange manuel selon l'invention.

### DESCRIPTION DETAILLEE DE L'INVENTION

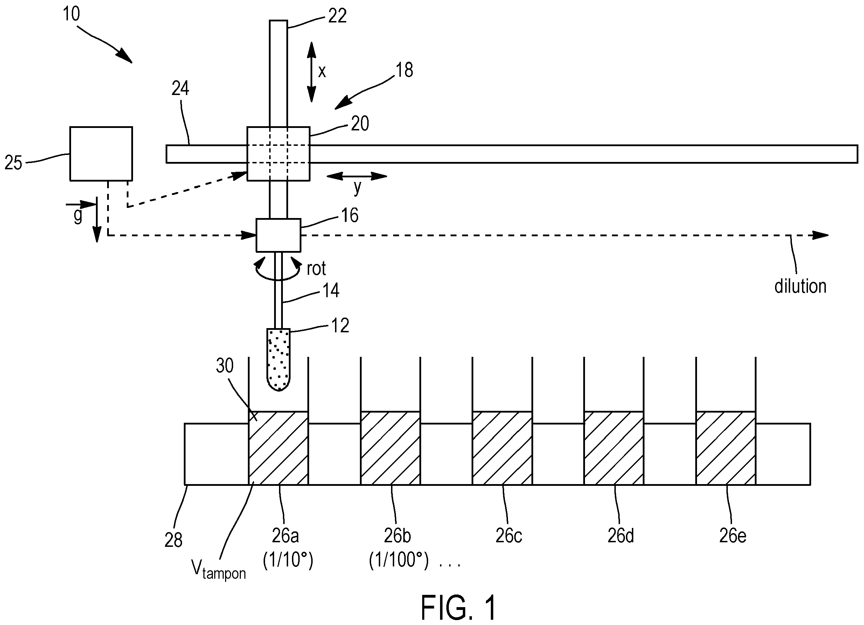

Sur la figure 1, un système 10 de mélange de solutions selon l'invention comprend :
- un premier récipient 12 sous la forme d'un godet, solidaire d'une tige 14 d'une manière décrite plus en détail ci-dessous ;
- un moteur électrique 16, par exemple à courant continu, sur lequel est fixé la tige 14, et apte à mettre en rotation cette dernière. Par exemple, la tige 14 est serrée dans un mandrin ou une griffe fixé(e) au bout de l'arbre du moteur d'une manière connue en soi. La tige **14** peut ainsi être désolidarisée du moteur **16** pour son remplacement ou le remplacement du godet **12** ;
- un dispositif 18 de déplacement de l'ensemble formé du moteur, de la tige **14** et du godet **14** selon deux axes X et Y perpendiculaires, par exemple constitué d'un moteur deux axes **20** et de deux rails à crémaillère **22**, **24** connus en soi de l'état de la technique. De manière préférentielle, une fois le système **10** installé et prêt à l'emploi, l'axe X est parallèle à la direction *̅g̅*̅ de la gravité, le plan défini par les axes X et Y étant vertical ;
- une unité de contrôle **25**, comprenant par exemple un circuit à microprocesseur, un microcontrôleur ou un ordinateur, qui commande le moteur **16** et le système de déplacement **18** de manière à mettre en œuvre le procédé selon l'invention tel que décrit ci-dessous. L'unité **25** comprend notamment une mémoire informatique lisible par ordinateur mémorisant des instructions pour mettre en œuvre le procédé ;
- un ensemble de deuxièmes récipients **26a-26e,** ou « pots », par exemple identiques, et optionnellement disposés dans un plateau ou un rack amovible **28** de manière à être déplacés ensemble ;
- optionnellement, des moyens de remplissage des pots (non représentés), par exemple une ou plusieurs pissettes délivrant sur commande une solution dans chaque pot.

Chacun des pots **26a-26e** est dimensionné pour contenir le godet **12** dans son intégralité. Plus particulièrement, chaque pot est dimensionné pour que le godet **12** plonge intégralement dans un volume prédéfini de solution **30** contenue dans le pot (ci-après « *Vₜₐₘₚ* »). Les pots **26a-26e** sont également positionnés de manière à ce que le dispositif de déplacement **18** puisse plonger entièrement le godet **12** dans chacun de ceux-ci, sans les faire déborder, y compris lors de la mise en rotation du godet **12** par le moteur **16.** Par exemple, chaque pot est rempli à moitié, ce qui évite par ailleurs le risque d'éclaboussures lors de la rotation du godet.

Le godet **12** a avantageusement une forme choisie pour éviter l'emprisonnement de bulle d'air lorsqu'il est plongé dans un pot, et ne comprend aucun renflement, rainure, et autre volume interne susceptible de piéger une bulle d'air lorsque le godet est plongé vide dans un pot rempli. La paroi interne du godet est notamment de section (définie perpendiculairement à un axe Z), constante depuis une ouverture supérieure **34** vers le bas du godet **38**, par exemple de forme cylindrique et/ou conique (e.g. un cylindre, un cône, un cylindre prolongé d'un cône ou un cône prolongé d'un cylindre), la partie inférieure du godet pouvant être ou non arrondie.

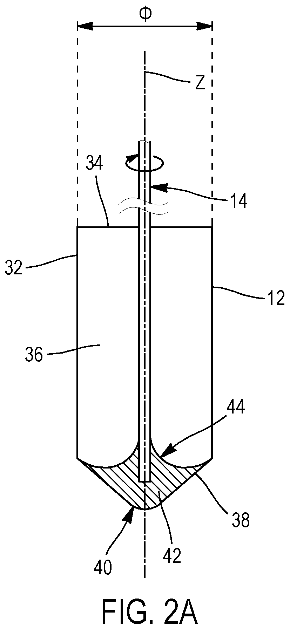

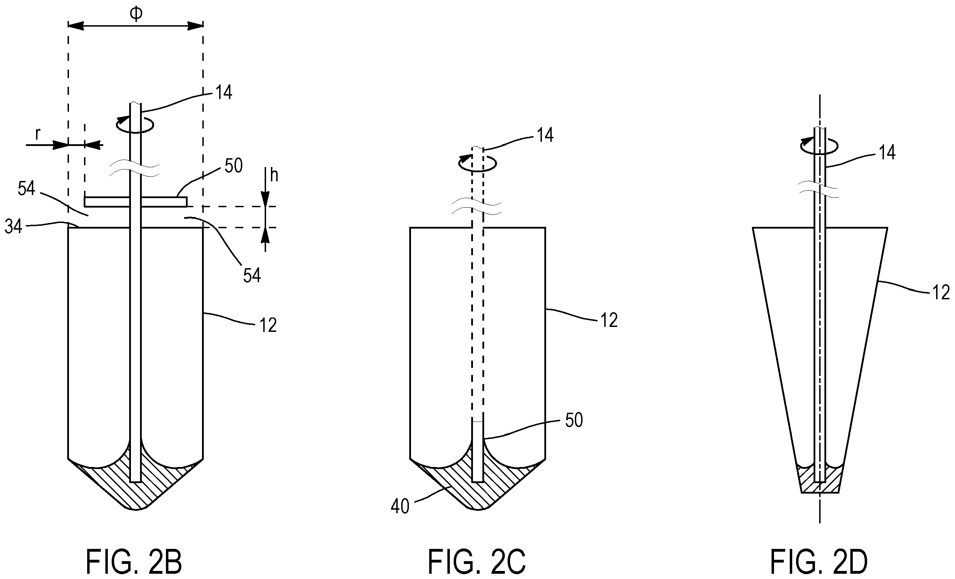

Comme illustré à la vue en coupe de la figure 2A, un godet **12** selon un premier mode de réalisation comprend une pièce ayant une symétrie de révolution d'axe Z, parallèle à l'axe X quand la tige est montée sur le moteur **16.** En variante, le godet est de section ovale, de section formant un polygone, de préférence régulier, centré sur l'axe Z, la section étant définie dans un plan perpendiculaire à l'axe Z. Cette pièce comporte une partie supérieure cylindrique **32**, pourvue d'une ouverture **34** pour remplir et désemplir un volume interne **36** du récipient (ci-après « *Vₛₒₗ* »), et une partie inférieure **38** de forme conique ou tronconique. La paroi interne du godet ne comporte donc aucun volume susceptible de piéger une bulle d'air lorsqu'il est plongé dans un pot. La paroi du godet **12** est pleine, c'est-à-dire sans trou, l'ouverture supérieure **34** étant donc le seul passage de fluide dans et hors du godet **12.** La forme de la partie inférieure **38** facilite l'immersion du godet **12** dans les solutions contenues dans les pots **26a-26e**, ainsi que le mouchage du liquide présent sur une extrémité **40** lorsque le godet **12** est retiré d'un pot. La tige **14**, par exemple de section circulaire, traverse le godet **12** par l'ouverture **34** en étant centrée sur l'axe Z, et est fixée par sa portion inférieure à une paroi interne **40** de la partie inférieure **38.** Par exemple, la tige **14** est fixée au moyen d'une colle **42**, colle dont la surface libre 44 définit un fond étanche pour le volume interne **36** et est non anguleuse afin d'éviter d'emprisonner du liquide (e.g. par capillarité dans un espace anguleux). Le volume interne **36** est ainsi défini par le volume de solution que le godet **12** peut contenir jusqu'à l'ouverture **34**, et donc le volume interne du godet **12** auquel sont soustraits le volume de la colle **42** et le volume de la tige contenue dans le godet **12.**

Dans une variante de réalisation, le godet **12** est fabriqué dans un matériau plastique, de préférence hydrophobe, comme par exemple du polypropylène ou du polystyrène cristal, et/ou sa surface externe est polie, ce qui minimise une pellicule de liquide sur la surface externe du godet, voire évite l'apparition de celle-ci, et permet donc de contrôler de manière plus précise le volume de liquide transporté par le godet.

Dans une variante de réalisation, les caractéristiques du godet **12**, principalement ses dimensions et optionnellement le matériau qui le constitue, sont choisis pour éviter que la solution qu'il contient ne se reverse lorsque le godet est penché avec un angle au moins égal à 30°, l'angle étant l'angle absolu formé entre l'axe Z du godet et la direction de la gravité. Notamment, pour un volume interne **36** du godet compris entre 0,5 millilitre (ml) et 2 ml, et en particulier 1 ml, le diamètre interne Φ du godet au niveau de l'ouverture **34** est compris entre 8,5 millimètres (mm) (correspondant à une aire de 57 mm²) et 13 mm (correspondant à une aire de 133 mm²). Préférentiellement, le diamètre Φ est compris entre 8,5 mm et 10 mm (correspondant à une aire 79 mm²), ce qui crée une capillarité telle que la solution reste piégée dans le godet même lorsque ce dernier, placé en dehors d'un pot et sans être en rotation, est à l'envers. En dessous de 8,5 mm de diamètre, les inventeurs ont constaté le risque d'apparition d'une bulle lorsque le godet est rempli, ce qui ne facilite par son remplissage initial par pipetage et nécessite une durée de rotation plus importante pour faire disparaître la bulle. Au-dessus de 13 mm de diamètre, on observe un reversement aisé de la solution contenue dans le godet lorsque celui-ci est penché.

En choisissant un diamètre Φ compris entre 8,5mm et 13mm, et de préférence entre 8,5 mm et 10 mm, il n'est donc pas besoin de prendre des précautions importantes, voire nullement besoin de prendre de quelconque précaution, pour éviter que le godet se penche ou subisse des vibrations lorsqu'il est en dehors d'un pot. Par exemple, il est possible de concevoir un automate sans moyen anti-vibration et/ou sans moyen contrôlant la verticalité du godet lors de son passage de pot en pot. De même, le godet peut être manipulé aisément par un technicien sans renverser la solution qu'il contient.

Un deuxième mode de réalisation, illustré à la vue schématique en coupe de la figure 2B, diffère du premier mode de réalisation par la présence d'une rondelle **50** fixée à la tige **14** au-dessus de l'ouverture **34** du godet **12** à une distance *h*. La rondelle **50**, de diamètre Φ-2*r* et coaxiale avec la tige **14**, définit donc un passage de fluide **54** d'aire limitée. Comme précédemment, les dimensions de ce passage sont choisies pour limiter le risque de renversement lorsque le godet est penché. Notamment, la rondelle est placée à une distance *h* comprise entre 3mm et 5mm de l'ouverture **34** et a un diamètre choisi de manière à définir un disque pour le passage de fluide de largeur *r* compris entre 3 mm et 5 mm, préférentiellement égal à 3mm. La rondelle **52** permet donc d'augmenter le diamètre Φ du godet au-delà des 13 mm en évitant le renversement de la solution qu'il contient.

Un godet selon un troisième mode de réalisation est illustré à la vue schématique en coupe de la figure 2B. Ce second mode de réalisation diffère des modes de réalisation précédents par les moyens de fixation de la tige **14** au godet **12.** En particulier, le godet **12** comprend au fond de celui-ci un tube **50**, par exemple moulé dans une partie inférieure pleine **38** du godet. Le tube **50** est apte à coopérer avec la tige **14** qui est introduite en force dans celui-ci. Le godet peut ainsi être livré seul et/ou la tige être fixée puis détachée du godet **12.**

En se référant à la vue schématique en coupe de la figure 2D, un godet selon une quatrième mode de réalisation diffère des modes de réalisation précédents par la forme du godet. En particulier, le godet **12** est de forme tronconique, par exemple de section circulaire, ovale ou formant un polyèdre, de préférence régulier, ce qui facilite l'homogénéisation de solutions visqueuses et pâteuses, ainsi que l'extraction de la solution contenue dans le godet.

Dans une cinquième mode de réalisation, le godet est pourvu sur sa face externe d'une ou plusieurs saillie(s), par exemple une ou plusieurs ailette(s) ou pâles, afin de faciliter et/ou accélérer l'homogénéisation. Si les inventeurs ont noté qu'un godet de face externe « lisse » (i.e. sans saillie) est suffisant pour bien homogénéiser rapidement un mélange de volume inférieur à 100mm, la présence de saillie facilite et accélère sensiblement l'homogénéisation au-delà de ce volume. En variante, la section du godet dans un plan perpendiculaire à l'axe Z est ovale, cette forme facilitant le mélange.

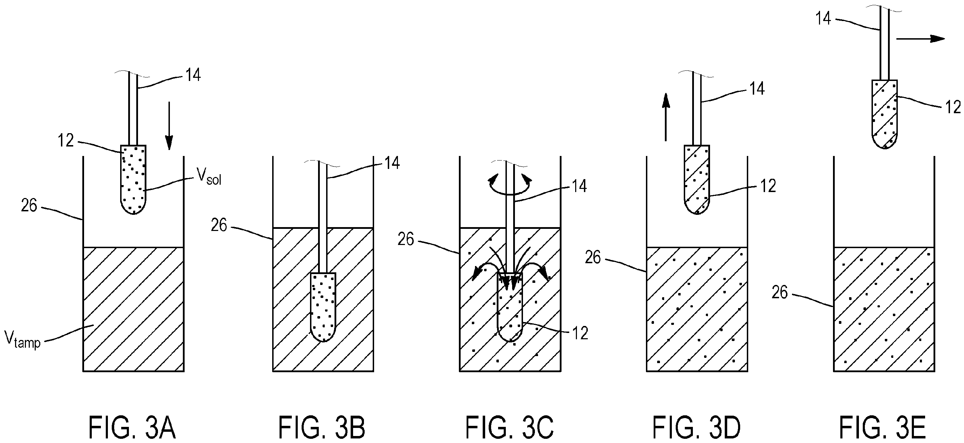

Un procédé de dilution sérielle décimale d'une solution mise en œuvre par le système venant d'être décrit est à présent décrit en relation avec les figures 3A-3E.

Dans une première étape de procédé, le godet **12** est rempli d'une solution à diluer, ou solution « initiale ». Par exemple, le godet **12** est plongé vide dans un pot, et avantageusement mis en rotation pour évacuer une éventuelle bulle accrochée à la paroi, ou la solution est versée à l'aide d'une pipette. Par ailleurs, les pots **26a-26e** sont remplis d'un tampon de dilution. Notamment pour une dilution décimale, le godet **12** est rempli en entier et contient donc une volume *Vₛₒₗ* de solution à diluer, et les pots **26a-26e** sont remplis chacun d'un volume de tampon de dilution *Vₜₐₘₚ* = 9 × *Vₛₒₗ.*

Le procédé se poursuit par les mélanges successifs de la solution contenu dans le godet 12 avec les tampons de dilution des pots **26a-26e**, par exemple dans l'ordre illustré par la flèche « dilution » de la figure 1. En particulier, pour un pot « **26** » quelconque parmi les récipients **26a-26e** :
a) l'unité **25** commande le dispositif de placement **18** pour que ce dernier positionne le godet **12** au-dessus de ce pot **26** avec le moteur de rotation **16** à l'arrêt (figure 3A) ;
b) l'unité **25** commande ensuite la descente par le dispositif **18** du godet **12** jusqu'à son immersion totale dans le tampon de dilution contenue dans le pot **26** (figure 3B) ;
c) une fois le godet **12** immobilisé en translation (moteur **20** à l'arrêt), l'unité **25** met le moteur **16** en marche, provoquant la mise en rotation du godet **12** (figure 3C). Une force centrifuge est ainsi créée qui éjecte la solution contenue dans le godet **12.** La rotation du godet **12** a en outre pour effet de brasser le contenu du récipient **26**, menant ainsi à un mélange homogène de la solution du godet **12** et du tampon de dilution du pot **26**, mélange qui baigne le godet **12** et donc le remplit ;
d) l'unité **25** désactive alors le moteur de rotation **16** puis commande le dispositif **18** de déplacement pour qu'il remonte le godet **12** afin de l'extraire du pot **26** (figure 3D ;
e) le dispositif **18** est alors commandé par l'unité **25** afin de déplacer le godet **12** vers le pot **26** suivant dans la liste (figure 3E).

Une nouvelle séquence de dilution, telle que venant d'être décrite, est alors mise en œuvre, sans que le godet **12** ne soit vidé entre deux dilutions.

De manière avantageuse, le vitesse de remontée du godet **12** est choisie de manière à éviter l'apparition d'une goutte de solution sur la pointe du godet. Cette vitesse est par exemple déterminée empiriquement en testant plusieurs vitesses et en choisissant la vitesse maximale évitant cette goutte, vitesse qui est mémorisée dans l'unité **25** pour la commande du dispositif de déplacement **18.**

Afin de facilité le mélange, il peut être également prévu une agitation du godet, c'est-à-dire un mouvement comprenant une rotation autour d'un axe perpendiculaire à l'axe Z.

Une fois le processus de dilution en série terminé, il est ainsi obtenu des pots **26a-26e** contenant respectivement une dilution égale ou proche du 1/10^{e} de la solution initiale (récipient **26a**), une dilution égale ou proche du 1/100^{e} de la solution initiale (récipient **26b**), une dilution égale ou proche du 1/1000^{e} de la solution initiale (récipient **26c**), etc. Un technicien de laboratoire peut ainsi extraire le rack **28** du système de solution et disposer d'une dilution sérielle décimale de la solution initialement contenue dans le godet **12.** De manière facultative, la solution finale contenue dans le godet **12** peut également être également récupérée, cette solution étant déjà calibrée au volume *Vₛₒₗ*.

A titre d'exemples numériques :
- le volume *Vₛₒₗ* du godet est égal à 1 millilitre, et la vitesse de rotation (mémorisée dans l'unité **25** pour la commande du moteur **16**) comprise entre 3800 et 5000 tours/minute, et de préférence égale à 4600 tours/minute ;
- le volume *Vₛₒₗ* du godet est égal à 2 millilitres, et la vitesse de rotation (mémorisée dans l'unité **25** pour la commande du moteur **16**) comprise entre 1900 et 4600 tours/minute, et de préférence égale à 3900 tours/minute ;
- le volume *Vₛₒₗ* du godet est égal à 5 millilitres, et la vitesse de rotation (mémorisée dans l'unité **25** pour la commande du moteur **16**) comprise entre 1000 et 3000 tours/minute, et de préférence égale à 2000 tours/minute.

Il a été décrit un exemple de procédé de dilution. La présente invention s'applique à tout type de mélange entre au moins la solution initialement contenue dans le godet et une solution contenue dans un récipient. Par exemple, des mélanges complexes de la solution contenue dans le godet avec plusieurs réactifs et/ou tampons peuvent être mise en œuvre selon l'invention.

Il a été décrit des pots identiques. En variante, les pots ont des volumes et/ou des formes différents, ce qui permet notamment d'augmenter la gamme de dilution.

Il a été décrit une dilution décimale. L'invention s'applique à tout type de dilution. Par exemple, des volumes de tampon de dilution différents peuvent être placés dans les pots afin par exemple d'augmenter la gamme de dilution.

De même, un seul godet a été décrit. En variante, plusieurs godets peuvent être utilisés pour mener des mélanges, e.g. des dilutions, en parallèle.

Il a été décrit un godet ayant une symétrie de révolution. En variante, le godet a une section transversale (i.e. perpendiculaire à l'axe Z) quelconque, par exemple ovale, polygonale (e.g. carré). Les plages de diamètres sont alors remplacées par les plages d'aires décrites ci-dessus.

Il a été décrit un moteur électrique pour mettre en rotation le godet. Evidemment, tout type de moyen permettant cette mise en rotation convient.

Il a été décrit un système de déplacement qui déplace le godet. En variante, il est prévu un système qui déplace les pots ou qui déplace les pots et le godet.

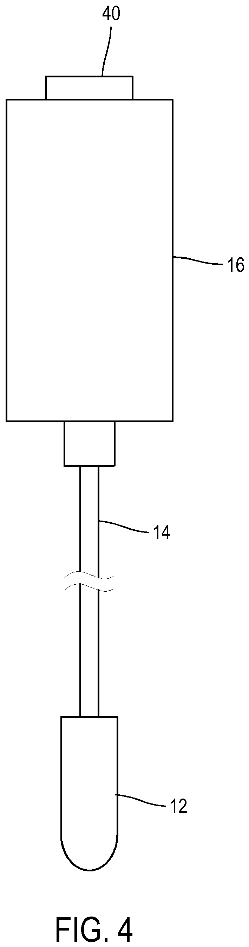

Il a été décrit un automate qui réalise automatiquement les mélanges. L'invention a également pour objet un dispositif portable manipulé par un technicien tel que schématiquement illustré à la figure 4. Un tel dispositif comporte un moteur **16** actionnable manuellement au moyen d'un bouton poussoir **60** et sur lequel est fixé la tige **14** pour mettre en rotation cette dernière. Par exemple, la tige **14** est serrée dans un mandrin ou une griffe fixé(e) au bout de l'arbre du moteur d'une manière connue en soi. La tige **14** peut ainsi être désolidarisée du moteur **16** pour son remplacement ou le remplacement du godet **12.** Le moteur **16**, par exemple à courant continu, comporte une batterie et un circuit de commande qui commande la rotation à une vitesse prédéterminée. Ce type de dispositif est bien connu en soi, par exemple du domaine des visseuses et des perceuses à main.

Par exemple, un technicien dispose sur un plan de travail un ou plusieurs pots contenant des solutions de dilution, remplit le godet **12** de solution à diluer, puis procède manuellement aux étapes décrites en relation avec les figures 3.

La présente invention présente ainsi les avantages suivants :
- une automatisation des mélanges, notamment des dilutions ;
- une précision élevée de la volumétrie des solutions mélangées, adaptée pour le mélange est la dilution de volumes supérieurs ou égaux au millilitres, en particulier pour des volumes compris entre 1 millilitres et 5 millilitres ;
- un risque faible de contamination inter-récipient lors des dilutions ;
- une efficacité de l'homogénéisation des solutions, notamment des dilutions.

## Revendications

1. Système (10) de mélange de solutions comprenant :
- un dispositif pour le mélange de solutions, comprenant :
un premier récipient (12) ayant :
(i) une partie supérieure cylindrique (32) pourvue d'une ouverture supérieure (34) configurée pour remplir et désemplir un volume interne (36) du récipient (12),
(ii) une paroi inférieure (38) de forme conique ou tronconique,
(iii) une paroi interne cylindrique et/ou conique pleine, c'est-à-dire sans trou, l'ouverture supérieure (34) étant le seul passage de fluide dans et hors du récipient (12), f
une tige (14) traversant l'ouverture (34) du récipient (12), ladite tige (14) étant solidaire à la paroi interne du récipient (12),
- au moins un deuxième récipient (26a-26e) aptes à contenir des solutions, chaque deuxième récipient (26a-26e) étant apte à contenir entièrement le premier récipient (12);
- des moyens (18) de déplacement du premier récipient (12) et/ou de chaque deuxième récipient (26a-26e) aptes à plonger le premier récipient entièrement dans chaque deuxième récipient ; et
- des moyens d'entrainement (16) en rotation du premier récipient (12) de manière à mélanger les solutions contenues dans le premier et le deuxième récipients lorsque le premier récipient (12) est plongé entièrement dans la solution contenue dans le deuxième récipient (26a-26e),
**caractérisé en ce que** la paroi interne du premier récipient (12) est de section, définie perpendiculairement à un axe Z, constante depuis l'ouverture supérieure (34) vers la paroi inférieure (38) du premier récipient (12).

2. Système selon la revendication 1, dans lequel le premier récipient a un volume interne (36) pour le remplissage de la solution compris entre 1 millilitre et 5 millilitres, et de préférence compris entre 1 millilitre et 2 millilitres .

3. Système selon la revendication 1, dans lequel le premier récipient présente :
- un volume interne (36) pour le remplissage de la solution compris entre 1 millilitre et 2 millilitres ;
- l'ouverture (34) pour le passage de fluide présente une aire comprise entre 57 mm² et 133 mm², en particulier l'ouverture (34) étant circulaire et de diamètre interne compris entre 8,5 millimètres et 13 millimètres

4. Système selon la revendication 1, 2 ou 3, comprenant plusieurs deuxièmes récipients (26a-26e), les moyens (18) de déplacement étant aptes à plonger le premier récipient (12) successivement dans les deuxièmes récipients (26a-26e).

5. Système selon l'une quelconque des revendications précédentes, comprenant des moyens de remplissage du premier récipient (12) avec une solution à diluer, et des moyens de remplissage de chaque deuxième récipient (26a-26e) avec un tampon de dilution.

6. Système selon l'une quelconque des revendications précédentes, dans lequel les moyens (16) d'entrainement en rotation comprennent :
- un moteur (16) raccordé à une seconde extrémité de la tige (14) et configuré pour entraîner en rotation celle-ci.

7. Système selon la revendication 6, dans lequel la tige (14) est raccordée au moteur (16) de manière amovible.

8. Système selon la revendication 6 ou 7, dans lequel le premier récipient (12) comprend un axe de symétrie sur lequel est positionné la tige (14).

9. Système selon la revendication 6, 7 ou 8, dans lequel la tige (14) comprend une rondelle (50) disposée au-dessus du premier récipient (12).

10. Système selon l'une quelconque des revendications précédentes, dans lequel le premier récipient (12) comprend une pièce avec une symétrie de révolution et ayant en partie inférieure une portion tronconique ou conique.

11. Système selon l'une quelconque des revendications précédentes, dans lequel le premier récipient (12) est constitué de plastique.

12. Procédé de mélange de solutions mise en œuvre par un système selon l'une quelconque des revendications précédentes, comprenant les étapes suivantes :
- fourniture d'un système de mélange de solutions selon l'une quelconque des revendications précédentes,
- remplissage du premier récipient (12) et d'au moins un deuxième récipient (26a-26e) avec des solutions à mélanger,
- mélange, pour chaque deuxième récipient (26a-26e), de la solution contenue dans chacun des deuxièmes récipients (26a-26e) et de la solution contenue dans le premier récipient (12), étant réalisé par les étapes suivantes :
(i) placement du premier récipient (12) entièrement dans chaque deuxième récipient (26a-26e) de manière à ce que le premier récipient (12) soit entièrement plongé dans la solution contenue dans le deuxième récipient (26a-26e) ;
(ii) mise en rotation du premier récipient (12) de manière à mélanger les solutions contenues dans le premier récipient (12) et le deuxième récipient (26a-26e).

13. Procédé selon la revendication 12, comprenant le mélange de la solution contenue dans le premier récipient (12) successivement avec les solutions contenues dans les deuxièmes récipients (26a-26e).

14. Procédé selon la revendication 12 ou 13, dans lequel chaque deuxième récipient (26a-26e) est rempli avec un volume prédéterminé de solution, et dans lequel le premier récipient (12) est de capacité volumique égale à 1/9^{e} dudit volume.

15. Procédé selon l'une des revendications 12 à 14, dans lequel le premier récipient (12) est rempli avec une solution à diluer, et dans lequel chaque deuxième récipient (26a-26e) est rempli avec un tampon de dilution.

16. Dispositif pour le mélange de solutions, comprenant :
- un récipient (12) ayant
(i) une partie supérieure cylindrique (32) pourvue d'une ouverture supérieure (34) configurée pour remplir et désemplir un volume interne (36) du récipient (12),
(ii) une paroi inférieure (38) de forme conique ou tronconique, (iii)
une paroi interne cylindrique et/ou conique pleine, c'est-à-dire sans trou,
l'ouverture supérieure (34) étant le seul passage de fluide dans et hors du récipient (12), la paroi interne étant de section, définie perpendiculairement à un axe Z, constante depuis l'ouverture supérieure (34) vers la paroi Inférieure (38) du premier récipient (12),
- une tige (14) traversant l'ouverture (34) du récipient (12), ladite tige (14) étant solidaire à la paroi interne du récipient (12), la tige (14) étant configurée pour être raccordée à un moteur (16) pour sa mise en rotation.

## Patentansprüche

1. System (10) zur Mischung von Lösungen, welches umfasst:
- eine Vorrichtung zur Mischung von Lösungen, welche umfasst:
einen ersten Behälter (12) mit:
(i) einem zylindrischen oberen Teil (32), der mit einer oberen Öffnung (34) versehen ist, die dafür ausgelegt ist, ein Innenvolumen (36) des Behälters (12) zu füllen und zu entleeren,
(ii) einer unteren Wand (38) von konischer oder kegelstumpfförmiger Form,
(iii) einer durchgehenden, das heißt kein Loch aufweisenden zylindrischen und/oder konischen Innenwand, wobei die obere Öffnung (34) der einzige Durchlass für Fluid in den und aus dem Behälter (12) ist,
eine Stange (14), welche die Öffnung (34) des Behälters (12) durchquert, wobei die Stange (14) mit der Innenwand des Behälters (12) fest verbunden ist,
- wenigstens einen zweiten Behälter (26a-26e), der geeignet ist, Lösungen zu enthalten, wobei jeder zweite Behälter (26a-26e) geeignet ist, den ersten Behälter (12) vollständig zu enthalten;
- Mittel (18) zur Bewegung des ersten Behälters (12) und/oder jedes zweiten Behälters (26a-26e), die geeignet sind, den ersten Behälter vollständig in jeden zweiten Behälter einzutauchen; und
- Mittel zum Drehantrieb (16) des ersten Behälters (12), um die im ersten und zweiten Behälter enthaltenen Lösungen zu mischen, wenn der erste Behälter (12) vollständig in die im zweiten Behälter (26a-26e) enthaltene Lösung eingetaucht ist,
**dadurch gekennzeichnet, dass** die Innenwand des ersten Behälters (12) einen senkrecht zu einer Achse Z definierten Querschnitt aufweist, der von der oberen Öffnung (34) bis zur unteren Wand (38) des ersten Behälters (12) konstant ist.

2. System nach Anspruch 1, wobei der erste Behälter ein Innenvolumen (36) zum Einfüllen der Lösung zwischen 1 Milliliter und 5 Millilitern, vorzugsweise zwischen 1 Milliliter und 2 Millilitern aufweist.

3. System nach Anspruch 1, wobei der erste Behälter aufweist:
- ein Innenvolumen (36) zum Einfüllen der Lösung zwischen 1 Milliliter und 2 Millilitern;
- wobei die Öffnung (34) für den Durchlass von Fluid eine Fläche zwischen 57 mm² und 133 mm² aufweist, wobei insbesondere die Öffnung (34) kreisförmig ist und einen Innendurchmesser zwischen 8,5 Millimetern und 13 Millimetern aufweist.

4. System nach Anspruch 1, 2 oder 3, welches mehrere zweite Behälter (26a-26e) umfasst, wobei die Mittel (18) zur Bewegung geeignet sind, den ersten Behälter (12) nacheinander in die zweiten Behälter (26a-26e) einzutauchen.

5. System nach einem der vorhergehenden Ansprüche, welches Mittel zum Füllen des ersten Behälters (12) mit einer zu verdünnenden Lösung und Mittel zum Füllen jedes zweiten Behälters (26a-26e) mit einem Verdünnungspuffer umfasst.

6. System nach einem der vorhergehenden Ansprüche, wobei die Mittel (16) zum Drehantrieb umfassen:
- einen Motor (16), der an ein zweites Ende der Stange (14) angeschlossen ist und dafür ausgelegt ist, diese drehend anzutreiben.

7. System nach Anspruch 6, wobei die Stange (14) lösbar an den Motor (16) angeschlossen ist.

8. System nach Anspruch 6 oder 7, wobei der erste Behälter (12) eine Symmetrieachse umfasst, auf welcher die Stange (14) positioniert ist.

9. System nach Anspruch 6, 7 oder 8, wobei die Stange (14) eine runde Scheibe (50) umfasst, die oberhalb des ersten Behälters (12) angeordnet ist.

10. System nach einem der vorhergehenden Ansprüche, wobei der erste Behälter (12) ein rotationssymmetrisches Teil umfasst, das im unteren Teil einen kegelstumpfförmigen oder konischen Abschnitt aufweist.

11. System nach einem der vorhergehenden Ansprüche, wobei der erste Behälter (12) aus Kunststoff besteht.

12. Verfahren zur Mischung von Lösungen, das von einem System nach einem der vorhergehenden Ansprüche durchgeführt wird und die folgenden Schritte umfasst:
- Bereitstellung eines Systems zur Mischung von Lösungen nach einem der vorhergehenden Ansprüche,
- Füllen des ersten Behälters (12) und wenigstens eines zweiten Behälters (26a-26e) mit zu mischenden Lösungen,
- Mischen, für jeden zweiten Behälter (26a-26e), der in jedem der zweiten Behälter (26a-26e) enthaltenen Lösung und der im ersten Behälter (12) enthaltenen Lösung, was mit den folgenden Schritten ausgeführt wird:
(i) Anordnen des ersten Behälters (12) vollständig in jedem zweiten Behälter (26a-26e), derart, dass der erste Behälter (12) vollständig in die im zweiten Behälter (26a-26e) enthaltene Lösung eingetaucht ist;
(ii) Versetzen des ersten Behälters (12) in Drehung, um so die Lösungen zu mischen, die im ersten Behälter (12) und im zweiten Behälter (26a-26e) enthalten sind.

13. Verfahren nach Anspruch 12, welches das Mischen der im ersten Behälter (12) enthaltenen Lösung nacheinander mit den in den zweiten Behältern (26a-26e) enthaltenen Lösungen umfasst.

14. Verfahren nach Anspruch 12 oder 13, wobei jeder zweite Behälter (26a-26e) mit einem vorbestimmten Volumen an Lösung gefüllt wird, und wobei der erste Behälter (12) ein Fassungsvolumen aufweist, das gleich 1/9 dieses Volumens ist.

15. Verfahren nach einem der Ansprüche 12 bis 14, wobei der erste Behälter (12) mit einer zu verdünnenden Lösung gefüllt wird und wobei jeder zweite Behälter (26a-26e) mit einem Verdünnungspuffer gefüllt wird.

16. Vorrichtung zur Mischung von Lösungen, welche umfasst:
- einen Behälter (12) mit:
(i) einem zylindrischen oberen Teil (32), der mit einer oberen Öffnung (34) versehen ist, die dafür ausgelegt ist, ein Innenvolumen (36) des Behälters (12) zu füllen und zu entleeren,
(ii) einer unteren Wand (38) von konischer oder kegelstumpfförmiger Form,
(iii) einer durchgehenden, das heißt kein Loch aufweisenden zylindrischen und/oder konischen Innenwand, wobei die obere Öffnung (34) der einzige Durchlass für Fluid in den und aus dem Behälter (12) ist, wobei die Innenwand einen senkrecht zu einer Achse Z definierten Querschnitt aufweist, der von der oberen Öffnung (34) bis zur unteren Wand (38) des ersten Behälters (12) konstant ist,
- eine Stange (14), welche die Öffnung (34) des Behälters (12) durchquert, wobei die Stange (14) mit der Innenwand des Behälters (12) fest verbunden ist, wobei die Stange (14) dafür ausgelegt ist, für ihre Drehung an einen Motor (16) angeschlossen zu werden.

## Claims

1. System (10) for mixing solutions comprising:
- a device for mixing solutions, comprising:
a first container (12) having:
(i) a cylindrical upper part (32) provided with an upper opening (34) configured for filling and emptying an internal volume (36) of the container (12),
(ii) a lower wall (38) which is conical or frustoconical in shape,
(iii) a solid, i.e. unperforated, cylindrical and/or conical internal wall, the upper opening (34) being the only fluid passage into and out of the container (12)
a stem (14) passing through the opening (34) of the container (12), said stem (14) being integral with the internal wall of the container (12),
- at least one second container (26a-26e) capable of containing solutions, each second container (26a-26e) being capable of entirely containing the first container (12);
- means (18) for displacing the first container (12) and/or each second container (26a-26e) capable of entirely immersing the first container in each second container; and
- rotational drive means (16) for the first container (12) so as to mix the solutions present in the first and second containers when the first container (12) is entirely immersed in the solution present in the second container (26a-26e),
**characterized in that** the internal wall of the first container (12) has a section, defined perpendicular to an axis Z, which is constant from the upper opening (34) towards the lower wall (38) of the first container (12).

2. System according to Claim 1, wherein the first container has an internal volume (36) for filling with solution of between 1 millilitre and 5 millilitres, preferably of between 1 millilitre and 2 millilitres.

3. System according to Claim 1, wherein the first container has:
- an internal volume (36) for filling with solution of between 1 millilitre and 2 millilitres;
- the opening (34) for fluid passage having an area of between 57 mm² and 133 mm², the opening (34) in particular being circular and of an internal diameter of between 8.5 millimetres and 13 millimetres.

4. System according to Claim 1, 2 or 3, comprising a plurality of second containers (26a-26e), the displacement means (18) being capable of immersing the first container (12) in succession in the second containers (26a-26e).

5. System according to any one of the preceding claims, comprising means for filling the first container (12) with a solution for dilution and means for filling each second container (26a-26e) with a dilution buffer.

6. System according to any one of the preceding claims, wherein the rotational drive means (16) comprise:
- a motor (16) connected to a second end of the stem (14) and configured to drive the latter in rotation.

7. System according to Claim 6, wherein the stem (14) is removably connected to the motor (16).

8. System according to Claim 6 or 7, wherein the first container (12) comprises an axis of symmetry on which the stem (14) is positioned.

9. System according to Claim 6, 7 or 8, wherein the stem (14) comprises a washer (50) arranged above the first container (12).

10. System according to any one of the preceding claims, wherein the first container (12) comprises a part with rotational symmetry and having a frustoconical or conical portion in the lower part.

11. System according to any one of the preceding claims, wherein the first container (12) is made of plastics material.

12. Method for mixing solutions implemented by a system according to any one of the preceding claims, comprising the following steps:
- providing a system for mixing solutions according to any one of the preceding claims;
- filling the first container (12) and at least one second container (26a-26e) with solutions for mixing,
- for each second container (26a-26e), mixing the solution in each of the second containers (26a-26e) and the solution present in the first container (12) by performing the following steps:
(i) placing the first container (12) entirely in each second container (26a-26e) such that the first container (12) is entirely immersed in the solution present in the second container (26a-26e) ;
(ii) setting the first container (12) in rotation so as to mix the solutions present in the first container (12) and the second container (26a-26e).

13. Method according to Claim 12, comprising mixing the solution contained in the first container (12) in succession with the solutions present in the second containers (26a-26e).

14. Method according to Claim 12 or 13, wherein each second container (26a-26e) is filled with a predetermined volume of solution, and wherein the volumetric capacity of the first container (12) is equal to 1/9^{th} of said volume.

15. Method according to one of Claims 12 to 14, wherein the first container (12) is filled with a solution for dilution and wherein each second container (26a-26e) is filled with a dilution buffer.

16. Device for mixing solutions, comprising:
- a container (12) having:
(i) a cylindrical upper part (32) provided with an upper opening (34) configured for filling and emptying an internal volume (36) of the container (12),
(ii) a lower wall (38) which is conical or frustoconical in shape,
(iii) a solid, i.e. unperforated, cylindrical and/or conical internal wall, the upper opening (34) being the only fluid passage into and out of the container (12), the internal wall (12) having a section, defined perpendicular to an axis Z, which is constant from the upper opening (34) towards the lower wall (38) of the first container (12),
- a stem (14) passing through the opening (34) of the container (12), said stem (14) being integral with the internal wall of the container (12), the stem (14) being configured to be connected to a motor (16) to set it in rotation.
